# DEMANDE DE BREVET EUROPEEN

(11) **EP 0 604 271 A1**
(43) Date de publication de la demande: **29.06.1994**
(21) Numéro de dépôt: 93403039.6
(22) Date de dépôt: 15.12.1993
(51) Int. Cl.: B01D 21/28, B01D 17/028

(54) **Décanteur lamellaire à double flux**

(30) Priorité: 21.12.1992 FR 9215330
(71) Demandeur: GEC ALSTHOM BERGERON SA, F-94120 Fontenay sous Bois (FR)
(72) Inventeur: Bouchard, Christian, F-93310 Le Pré Saint Gervais (FR)
(74) Mandataire: Bourely, Paul

(57) **Abrégé**

Les lames de ce décanteur (L1, M1, L2...) délimitent des veines à contre-courant (V1) raccordées à l'entrée (ED) du décanteur et alimentant des veines à cocourant (W1) raccordées à la sortie (SD) de ce décanteur. Des boues provenant de ces deux types de veines sont recueillies dans deux bacs récepteurs (BE, BS) correspondants.

L'invention s'applique notamment à l'épuration des eaux.

## Description

La présente invention concerne un décanteur lamellaire. De tels décanteurs sont utilisés pour épurer un fluide de base chargé de particules. Typiquement ce fluide est de l'eau et ces particules sont solides et plus denses que cette eau. Mais elles ont été maintenues ou mises en suspension par une turbulence affectant cette eau. Ils sont agencés pour permettre à ces particules de se déposer sous l'action de la gravité sur des parois réceptrices formant les parois inférieures de veines parcourues par cette eau à basse vitesse, et en tous cas en régime d'écoulement laminaire.

A volume de décanteur imposé, le débit d'eau susceptible d'être épuré est d'autant plus petit que les particules à en extraire ont une vitesse de sédimentation plus petite, cette vitesse étant d'autant plus petite que les particules sont plus fines ou présentent une différence de densité plus petite par rapport au liquide de base constitué par l'eau qui les porte. Dans le but d'augmenter le débit d'eau chargée susceptible d'être épuré par unité de volume du décanteur il est connu de constituer les surfaces réceptrices par un grand nombre de lames inclinées parallèles formant entre elles un grand nombre de veines dans lesquelles l'eau peut circuler soit à contre-courant, c'est-à-dire que son déplacement est ascendant alors que le déplacement gravitaire des particules par rapport à l'eau est descendant, soit à cocourant c'est-à-dire que ces déplacements sont tous deux descendants. Toutes choses égales d'ailleurs, une veine à cocourant, c'est-à-dire parcourue à cocourant, permet de déposer plus rapidement des particules plus fines qu'une veine à contre-courant.

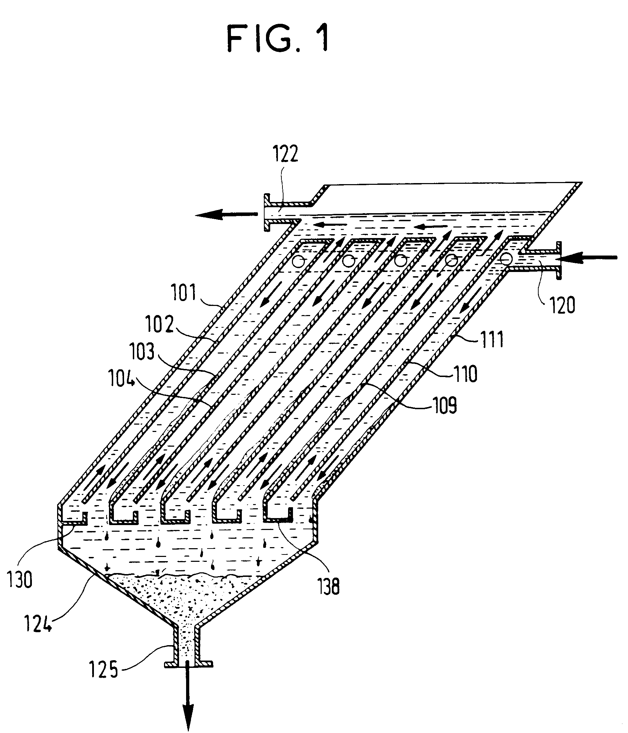

Un décanteur lamellaire connu est représenté en coupe verticale à la figure 1. Il comporte des lames inclinées 101, 102, 103, 104...109, 110, 111 délimitant des veines à cocourant telles qu'entre les lames 102 et 103 et entre les lames 110 et 111 et des veines à contre-courant telles qu'entre les lames 101 et 102 et entre les lames 109 et 110. Chaque lame à cocourant est raccordée en série avec une lame à contre-courant entre une entrée 120 et une sortie 122 de ce décanteur de manière à permettre à des particules chargeant un fluide reçu en continu sur cette entrée de déposer par gravité un sédiment sur une dite lame à partir d'une dite veine. Ce décanteur comporte en outre un volume récepteur 124 pour recueillir ledit sédiment en continu après que, sous l'action de la gravité, il ait glissé jusqu'à un bord de cette lame, et s'en soit échappé.

Dans chaque segment de ce décanteur constitué par une veine à cocourant et une veine à contre-courant, le sédiment n'est recueilli qu'à partir de la veine à cocourant. Cette dernière est parcourue par l'eau avant la veine à contre-courant en raison des positions hautes de l'entrée et de la sortie de ce décanteur et de la position basse d'un bord de lame autour duquel se réalise l'inversion du sens d'écoulement de l'eau. Ce bord d'inversion d'écoulement est constitué par le bord inférieur de la lame intermédiaire telle que 102 ou 110 de ce segment.

L'inversion du sens de l'écoulement est facilitée par un guide incurvé tel que 130 ou 138.

La boue recueillie dans le volume récepteur 124 est évacuée par un orifice 125.

La présente invention a notamment pour buts de permettre d'une manière simple d'accroître le débit d'eau épuré par un décanteur lamellaire d'encombrement imposé et/ou de diminuer l'encombrement de ce décanteur si le débit à épurer est imposé et/ou de permettre d'extraire des particules de vitesse de sédimentation plus petite que précédemment, et ceci aussi bien dans le cas où les particules à extraire sont plus denses que l'eau, que dans celui, ou telles des gouttelettes d'huile, elles sont au contraire moins denses. On comprendra que cette invention vise à permette d'atteintre de tels buts même lorsque le fluide de base portent les particules à extraire est autre que de l'eau.

Dans ces buts elle a notamment pour objet un décanteur lamellaire à double flux comportant une succession de lames inclinées délimitant au moins une veine à cocourant et au moins une veine à contre-courant, les deux dites veines à cocourant et à contre-courant étant raccordées en série entre une entrée et une sortie de ce décanteur de manière à permettre à des particules chargeant un fluide reçu en continu sur cette entrée de déposer par gravité un sédiment sur l'une de ces lames à partir de l'une de ces veines, ce décanteur comportant en outre un volume récepteur pour recueillir ledit sédiment en continu après que, sous l'action de la gravité, il ait glissé jusqu'à un bord de ladite lame et s'en soit échappé, ce décanteur étant caractérisé par le fait que sadite entrée est raccordé à ladite veine à contre courant, ladite veine à cocourant étant raccordée à sadite sortie, de manière qu'un dit sédiment soit déposé sur une dite lame et recueilli dans un dit volume récepteur à partir de chacune des deux dites veines.

A l'aide des figures schématiques ci-jointes, on va décrire ci-après comment la présente invention peut être mise en oeuvre, étant entendu que les éléments et dispositions mentionnés et représentés ne le sont qu'à titre d'exemples non limitatifs. Lorsqu'un même élément est représenté sur plusieurs figures il y est désigné par le même signe de référence.

La figure 1 a déjà été décrite et représente une vue en coupe verticale longitudinale d'un décanteur lamellaire connu.

La figure 2 représente une vue en perspective des lames et des bacs récepteurs d'un décanteur selon la présente invention.

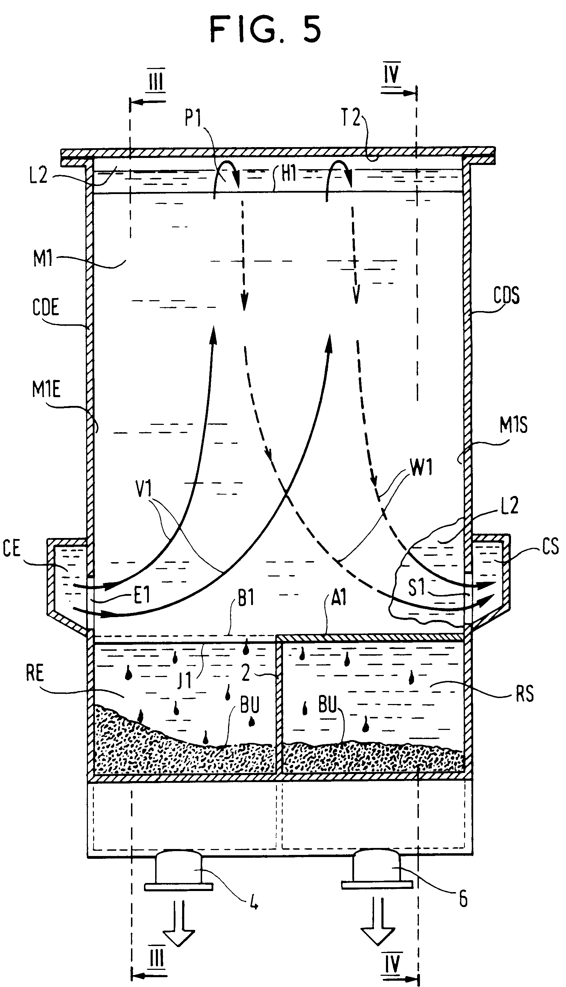

Les figures 3, 4 et 5 représentent des vues des lames et bacs récepteurs de la figure 2 en coupe selon des lignes III-III et IV-IV de la figure 5 et V-V de la figure 3, respectivement.

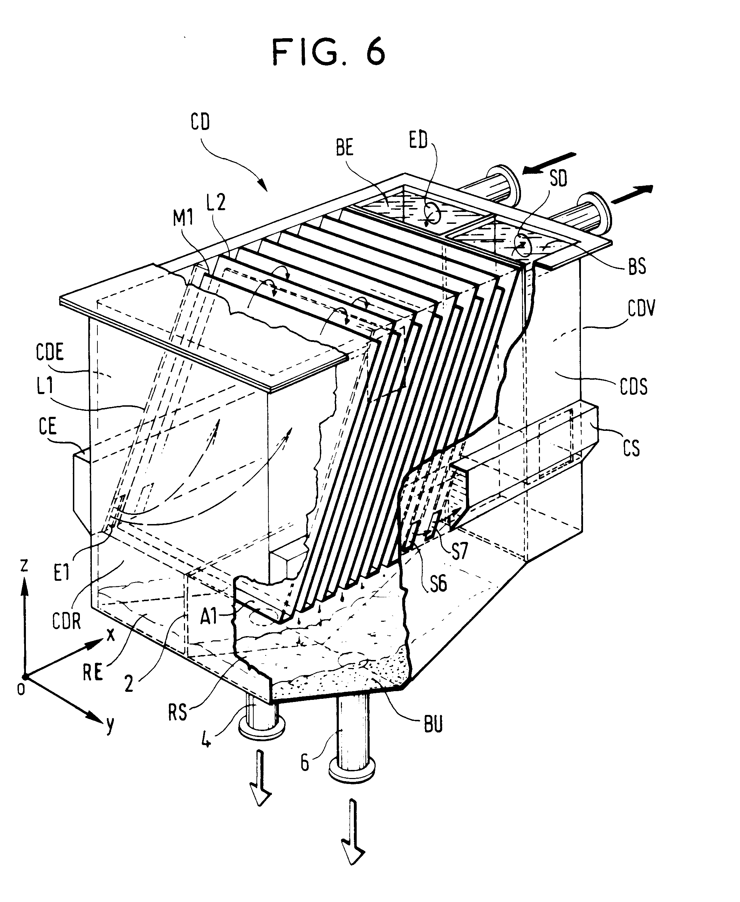

La figure 6 représente une vue d'ensemble en perspective du décanteur de la figure 2.

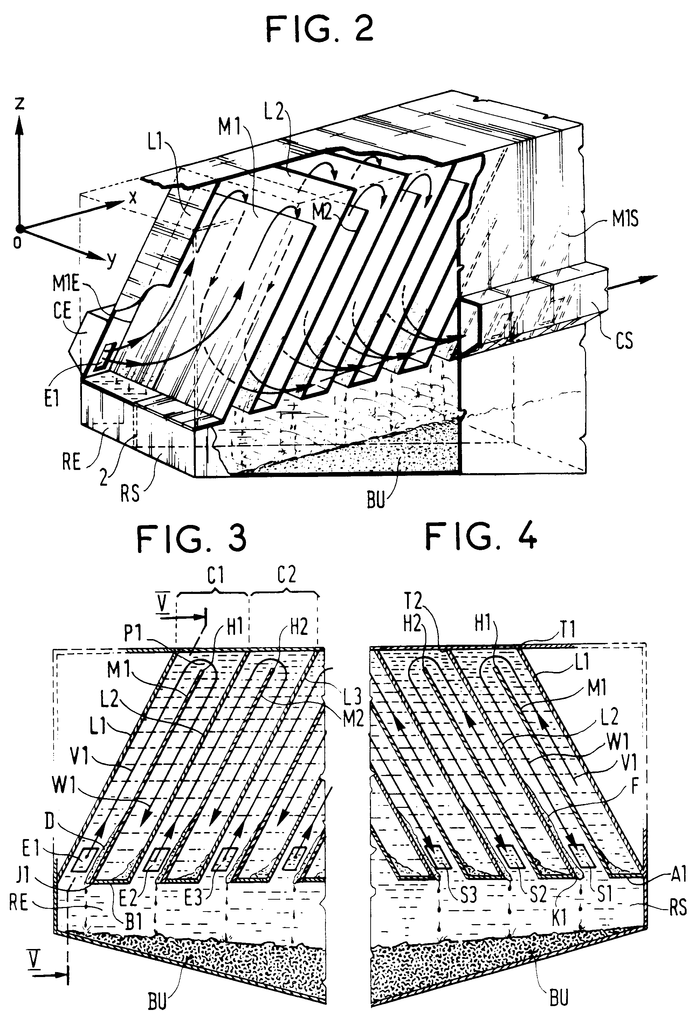

On va tout d'abord décrire de manière générale les éléments essentiels d'un décanteur lamellaire à double flux, ceci en se référant aux figures 2 et suivantes à titre d'exemple, et en considérant que les particules à extraire peuvent être plus denses ou moins denses que le fluide de base. Les éléments qui vont être d'abord décrits sont communs aux décanteurs connu et selon la présente invention précédemment mentionnés. Ces éléments communs sont les suivants:
- Une entrée de décanteur ED pour recevoir un fluide d'entrée constitué par le fluide de base portant en suspension des particules présentant une différence de densité par rapport à ce fluide de base. Cette différence de densité a un sens ou le sens opposé selon que ces particules sont plus denses ou moins denses que ce fluide de base. Le fluide d'entrée présente une concentration d'entrée en ces particules.
- Un corps de décanteur CD s'étendant selon une direction longitudinale OX entre un coté arrière CDR et un coté avant CDV, selon une direction transversale OY entre deux cotés mutuellement opposés CDE, CDS, et selon la direction verticale OZ définie par la gravité. Deux sens mutuellement opposés OZ, ZO et des cotes Z sont définies selon la direction verticale dans un sens de croissance qui sera défini plus loin. Ce corps est raccordé à l'entrée de décanteur ED pour que le fluide d'entrée effectue dans ce corps un séjour au cours duquel la gravité entraîne les particules dans un déplacement de décantation par rapport au fluide de base. Ce déplacement a lieu selon la direction verticale, dans un sens de décantation ZO dépendant du sens de la différence de densité. Plus précisément le sens de décantation est descendant ou ascendant selon que les particules sont plus denses ou moins denses que le fluide de base. Il correspond à une diminution desdites cotes Z. Le séjour des particules dans ce corps est suffisamment long pour que le déplacement de décantation provoque, à partir du fluide d'entrée, l'extraction d'une boue BU constituée par certaines au moins des particules.
- Une sortie de décanteur SD raccordée au corps de décanteur CD pour fournir, à partir du fluide d'entrée, un fluide de sortie constitué au moins principalement par le fluide de base. Ce fluide de sortie présente une concentration de sortie en particules au moins diminuée rapport à la concentration d'entrée, ceci en raison de la extraction de boue. Cette concentration de sortie serait nulle si l'extraction de boue était totale.
- Enfin un volume récepteur RE alimenté par le corps de décanteur pour recevoir la boue et permettre de l'évacuer hors du décanteur.

Le corps de décanteur CD comporte des lames L1, M1, L2, M2, L3... se succédant d'arrière en avant et présentant chacune, telle la lame M1, une largeur selon ladite direction transversale entre deux bords latéraux M1E, M1S. Chaque lame présente en outre une longueur s'étendant selon une direction de lame entre un bord de cote inférieure J1 et un bord de cote supérieure H1 constituant deux bords extrêmes de cette lame. Cette direction de lame présente deux sens mutuellement opposés H1, J1 et J1, H1. Chaque lame étant inclinée de sorte que la direction de lame soit oblique entre les directions longitudinale et verticale, toutes les lames étant inclinées dans un même sens de sorte que selon la direction longitudinale leurs bords de cotes supérieures soient tous d'un même coté de leurs bords de cotes inférieures, respectivement.

Chaque lame L1 sauf la dernière forme avec une lame consécutive M1 une veine V1 pour la circulation du fluide de base selon la direction de lame. Les deux lames de cette veine constituent une lame réceptrice M1 et une lame non réceptrice L1 telles que le point de rencontre de cette lame réceptrice avec une ligne verticale soit situé à une cote inférieure à celle du point de rencontre de cette lame non réceptrice avec la même ligne verticale.

Le corps de décantateur CD présente au moins un segment C1 comportant lui-même trois lames disposées consécutivement et constituant une lame arrière L1, une lame intermédiaire M1 et une avant L2 de ce segment.

Les lames arrière L1 et la lame intermédiaire M1 forment entre elles une veine primaire V1 de ce segment. Cette veine est parcourue par le fluide de base dans un sens d'écoulement primaire J1, H1 de la direction de lame. Cet écoulement a lieu à partir d'une entrée E1 du segment, cette entrée étant raccordée à l'entrée de décanteur ED, jusqu'à un passage intermédiaire P1 du segment. Il est réalisé de manière que le déplacement de décantation dépose un sédiment primaire D sur la lame réceptrice M1 de cette veine. Pour cela, notamment les vitesses d'écoulement sont choisies suffisamment petites. Un volume récepteur RE est disposé pour recevoir ce sédiment lorsqu'il s'échappe de cette lame réceptrice. Ce sédiment constitue alors ladite boue dans ce volume récepteur.

Les lames intermédiaire M1 et avant L2 forment entre elles une veine secondaire W1 parcourue par le fluide de base dans un sens d'écoulement secondaire H1, K1 opposé au sens d'écoulement primaire. Ce fluide s'y écoule à partir du passage intermédiaire P1 jusqu'à une sortie S1 du segment, cette sortie étant raccordée à la sortie de décanteur SD.

Le passage intermédiaire est formé autour d'un bord d'inversion d'écoulement H1 constitué par un bord extrême de la lame intermédiaire M1. Les lames réceptrices des veines primaire V1 et secondaire W1 seront désignées plus simplement ci-après comme des lames réceptrices primaire M1 et secondaire L2.

Le décanteur selon la présente invention se distingue dudit décanteur connu par le fait que le bord d'inversion d'écoulement H1 est constitué par le bord de cote supérieure de la lame intermédiaire M1, les entrée E1 et sortie S1 du segment étant situées au voisinage du bord de cote inférieure J1 de cette lame intermédiaire. Il en résulte que la veine primaire V1 est une veine à contre-courant et la veine secondaire W1 une veine à cocourant. Ceci permet à un sédiment secondaire F composé de particules relativement fines de se déposer sur la lame réceptrice secondaire L2. Un volume récepteur RS est disposé pour recevoir ce sédiment secondaire lorsqu'il s'échappe de cette lame réceptrice secondaire, ce sédiment constituant lui aussi une dite boue dans ce volume récepteur.

De préférence les entrée E1 et sortie S1 dudit segment C1 sont latérales c'est-à-dire qu'elles sont respectivement situées sur des cotés entrée CDE et sortie CDS du corps de décanteur CD, ces cotés constituant deux dits cotés mutuellement opposés selon la direction transversale OY. Ces entrée et sortie latérales sont situées par ailleurs à des cotes supérieures à celles de bords d'échappement primaire et secondaire à partir desquels les sédiments s'échappent des lames réceptrices. Ces bords sont les bords inférieurs J1, K1 des lames réceptrices primaire M1 et secondaire L2, respectivement.

L'avantage de cette position des ouvertures constituées par les entrée et sortie du segment tient au fait que les courants qu'elles induisent dans le fluide de base à leur voisinage pourraient avoir une force suffisante pour briser et remettre en suspension les fragments de sédiment imparfaitement agglomérés qui se détachent des bords d'échappement. Cet avantage est que ces courants ne rencontrent pas ces fragments et ne peuvent donc les briser.

Le segment C1 comporte en outre des volumes récepteurs primaire RE et secondaire RS présents à des cotes inférieures à celles des bords d'échappement primaire J1 et secondaire K1 à la verticale de ces bords pour recueillir les sédiments primaire D et secondaire F.

Dans le décanteur donné en exemple de la présente invention les lames L1, M1, L2, M2, L3... sont inclinées dans un sens tel que leurs bords de cotes supérieures H1 sont en avant de leurs bords de cotes inférieures J1, respectivement. Les lames intermédiaire M1 et avant L2 constituent donc lesdites lames réceptrices primaire V1 et secondaire W1, respectivement.
De préférence le corps de décanteur CD comporte une succession longitudinale de dits segments C1, C2..., et la lame avant L2 de chaque segment C1 autre que le dernier constitue aussi la lame arrière du segment C2 suivant. Les bords de cote supérieure T1, T2... des lames avant et arrière L1, L2, L3 sont alors formés à des cotes supérieures à celles des bords d'inversion d'écoulement H1, H2 de manière à isoler les segment les uns des autres par ces lames avant et arrière tout en ménageant lesdits passages intermédiaires P1 à l'intérieur de ces segments à des cotes supérieures à celle de ces bords d'inversion.

Les volumes récepteurs primaires R2 (ou secondaires RS) de tous les segments se raccordent longitudinalement d'un même coté du corps de décanteur. Ils sont constitués par des zones longitudinalement successives d'un bac récepteur primaire RE (ou secondaire RS, respectivement). Ces bacs récepteurs primaire et secondaire sont mutuellement séparés par une cloison verticale longitudinale 2. Chaque segment C1 comporte en outre des parois obturatrices primaire A1 et secondaire B1 obturant les veines primaire V1 et secondaire W1 vers les bacs récepteurs secondaire RS et primaire RE, respectivement. Cette cloison et ces parois obturatrices évitent des raccordements parasites entre des veines primaires et secondaires par l'intermédiaire des bacs récepteurs.

Ces bacs récepteurs primaire RE et secondaire RS sont situés des cotés entrée CDE et sortie CDS du corps de décanteur CD, respectivement. Un avantage de cette disposition tient au fait que les plus grosses particules se déposent à partir de la veine primaire et plus particulièrement au voisinage de l'entrée du segment. Cette disposition raccourcit donc le trajet qu'elles ont à parcourir jusqu'au bac récepteur. L'épaisseur de la veine primaire, c'est-à-dire la largeur de l'intervalle entre les lames arrière L1 et intermédiaire M1, est par ailleurs choisie suffisamment grande pour éviter le risque de colmatage par ces particules.

De préférence le décanteur comporte en outre:
- un collecteur d'entrée CE (et un collecteur de sortie CS) s'étendant longitudinalement et raccordant les entrées E1, E2... (et les sorties S1, S2...) de tous les segments C1, C2... (respectivement),
- des bacs d'entrée BE (et de sortie BS) raccordés d'une part aux entrée ED (et sortie SD) de décanteur d'autre part aux collecteurs d'entrée (et de sortie, respectivement),

- et des moyens d'évacuation de boue 4, 6 pour évacuer les boues BU à partir des bacs récepteurs RE, RS. Ces moyens d'évacuation sont par exemple constitués par des orifices situés à des extrémités inférieures à ces bacs.

Typiquement ledit fluide de base est un liquide de base, par exemple de l'eau, et lesdites particules sont plus denses que ce liquide. Dans ce cas, comme représenté, ledit sens de décantation est descendant, lesdites cotes croissent vers le haut, ledit bord d'inversion d'écoulement H1 d'un segment C1 est un bord supérieur de sa lame intermédiaire M1, et les entrée E1 et sortie S1 de ce segment sont situées au bas de ses veines primaire V1 et secondaire W1, respectivement. Quant aux bacs récepteurs RE, RS ils sont situés sous les lames L1, M1, L2, M2, L3 plus bas que les entrées et sorties des segments C1,C2....

## Revendications

**1/** Décanteur lamellaire à double flux comportant une succession de lames inclinées (L1, M1, L2, L3...) délimitant au moins une veine à cocourant (W1) et au moins une veine à contre-courant (V1), les deux dites veines à cocourant et à contre-courant étant raccordées en série entre une entrée (ED) et une sortie (SD) de ce décanteur de manière à permettre à des particules chargeant un fluide reçu en continu sur cette entrée de déposer par gravité un sédiment (D) sur l'une de ces lames (M1) à partir de l'une de ces veines (V1), ce décanteur comportant en outre un volume récepteur (R2) pour recueillir ledit sédiment (D) en continu après que, sous l'action de la gravité, il ait glissé jusqu'à un bord (J1) de ladite lame et s'en soit échappé, ce décanteur étant caractérisé par le fait que sadite entrée (ED) est raccordé à ladite veine à contre courant (V1), ladite veine à cocourant (W1) étant raccordée à sadite sortie (SD), de manière qu'un dit sédiment (D, F) soit déposé sur une dite lame (M1, L2) et recueilli dans un dit volume récepteur (RE, RS) à partir de chacune des deux dites veines.

**2/** Décanteur selon la revendication 1, comportant:
- une entrée de décanteur (ED) pour recevoir un fluide d'entrée constitué d'un fluide de base portant en suspension des particules présentant une différence de densité par rapport à ce fluide de base, cette différence de densité ayant un sens, ledit fluide d'entrée présentant une concentration d'entrée en lesdites particules,
- un corps de décanteur (CD) s'étendant selon une direction longitudinale (OX) entre un coté arrière (CDR) et un coté avant (CDV), selon une direction transversale (OY) entre deux cotés mutuellement opposés (CDE, CDS), et selon la direction verticale (OZ) définie par la gravité, deux sens mutuellement opposés (OZ, ZO) et des cotes (Z) étant définies selon ladite direction verticale, ledit corps étant raccordé à ladite entrée de décanteur (ED) pour que ledit fluide d'entrée effectue dans ce corps un séjour au cours duquel la gravité entraîne lesdites particules dans un déplacement de décantation par rapport audit fluide de base selon ladite direction verticale, ce déplacement étant entraîné dans un sens de décantation (ZO) dépendant dudit sens de ladite différence de densité et correspondant à une diminution desdites cotes (Z), ledit séjour étant suffisamment long pour que ce déplacement de décantation provoque, à partir dudit fluide d'entrée, une extraction d'une boue (BU) constituée par certaines au moins desdites particules,
- une sortie de décanteur (SD) raccordée audit corps de décanteur (CD) pour fournir, à partir dudit fluide d'entrée, un fluide de sortie constitué par ledit fluide de base et présentant une concentration de sortie en lesdites particules au moins diminuée rapport à ladite concentration d'entrée en raison de ladite extraction de boue,
- et un volume récepteur (RE) alimenté par ledit corps de décanteur pour recevoir ladite boue et permettre d'évacuer cette boue hors dudit décanteur,
- ledit corps de décanteur (CD) comportant lui-même des lames (L1, M1, L2, M2, L3...) se succédant d'arrière en avant et présentant chacune (M1) une largeur selon ladite direction transversale entre deux bords latéraux (M1E, M1S) de cette lame, chaque dite lame présentant en outre une longueur s'étendant selon une direction de lame entre un bord de cote inférieure (J1) et un bord de cote supérieure (H1) constituant deux bords extrêmes de cette lame, cette direction de lame ayant deux sens mutuellement opposés, chaque dite lame étant inclinée de sorte que ladite direction de lame soit oblique entre lesdites directions longitudinale et verticale, toutes lesdites lames étant inclinées dans un même sens de sorte que, selon ladite direction longitudinale, leurs dits bords de cotes supérieures soient tous d'un même coté de leurs dits bords de cotes inférieures, respectivement,
- chaque dite lame (L1) sauf la dernière formant avec une lame consécutive (M1) une veine (V1) pour la circulation dudit fluide de base selon ladite direction de lame, les deux lames de cette veine constituant une lame réceptrice (M1) et une lame non réceptrice (L1) de cette veine telles que le point de rencontre de cette lame réceptrice avec une ligne verticale soit situé à une cote inférieure à celle du point de rencontre de cette lame non réceptrice avec la même ligne verticale,
- ledit corps de décantateur (CD) présentant au moins un segment (C1) comportant lui-même trois dites lames disposées consécutivement et constituant une lame arrière (L1), une lame intermédiaire (M1) et une avant (L2) de ce segment,
- ladite lame arrière (L1) et ladite lame intermédiaire (M1) formant entre elles une veine primaire (V1) dudit segment parcourue par ledit fluide de base dans un sens d'écoulement primaire (J1, H1) de ladite direction de lame à partir d'une entrée (E1) dudit segment raccordée à ladite entrée de décanteur (ED) jusqu'à un passage intermédiaire (P1) dudit segment, de manière que ledit déplacement de décantation dépose un sédiment primaire (D) sur ladite lame réceptrice (M1) de cette veine, un dit volume récepteur (RE) étant disposé pour recevoir ce sédiment lorsqu'il s'échappe de cette lame réceptrice, ce sédiment constituant alors ladite boue dans ce volume récepteur,
- lesdites lames intermédiaire (M1) et avant (L2) formant entre elles une veine secondaire (W1) parcourue par ledit fluide de base dans un sens d'écoulement secondaire (H1, K1) opposé audit sens d'écoulement primaire, cette veine étant parcourue par ce fluide à partir dudit passage intermédiaire (P1) jusqu'à une sortie (S1) dudit segment raccordée à ladite sortie de décanteur (SD), ledit passage intermédiaire étant formé autour d'un bord d'inversion d'écoulement (H1) constitué par un dit bord extrême de ladite lame intermédiaire (M1), lesdites lames réceptrices desdites veines primaire (V1) et secondaire (W1) constituant des lames réceptrices primaire (M1) et secondaire (L2), ledit décanteur étant caractérisé par le fait que ledit bord d'inversion d'écoulement (H1) est constitué par ledit bord de cote supérieure de ladite lame intermédiaire (M1), lesdites entrée (E1) et sortie (S1) dudit segment étant situées au voisinage dudit bord de cote inférieure (J1) de cette lame intermédiaire, de sorte que ladite veine primaire (V1) est une veine à contre-courant et ladite veine secondaire (W1) une veine à cocourant et qu'un sédiment secondaire (F) est déposé aussi sur ladite lame réceptrice secondaire (L2), un dit volume récepteur (RS) étant disposé pour recevoir ledit sédiment secondaire lorsqu'il s'échappe de cette lame réceptrice secondaire, ce sédiment constituant une dite boue dans ce volume récepteur.

**3/** Décanteur selon la revendication 2, caractérisé par le fait que lesdites entrée (E1) et sortie (S1) dudit segment (C1) sont latérales et respectivement situées sur des cotés entrée (CDE) et sortie (CDS) dudit corps de décanteur (CD) constituant deux dits cotés mutuellement opposés selon ladite direction transversale (OY), ces entrée et sortie latérales étant situées par ailleurs à des cotes supérieures à celles de bords d'échappement primaire et secondaire constitués par lesdits bords inférieurs (J1, K1) desdites lames réceptrices primaire (M1) et secondaire (L2), respectivement, ledit segment (C1) comportant en outre des volumes récepteurs primaire (RE) et secondaire (RS) présents à des cotes inférieures à celles desdits bords d'échappement primaire (J1) et secondaire (K1) à la verticale de ces bords pour recueillir lesdits sédiments primaire (D) et secondaire (F).

**4/** Décanteur selon la revendication 2, caractérisé par le fait que lesdites lames (L1, M1, L2, M2, L3...) sont inclinées dans un sens tel que leurs dits bords de cotes supérieures (H1) sont en avant de leurs dits bords de cotes inférieures (J1), respectivement, et que lesdites lames intermédiaire (M1) et avant (L2) constituent lesdites lames réceptrices primaire (V1) et secondaire (W1), respectivement.

**5/** Décanteur selon la revendication 3, caractérisé par le fait que ledit corps de décanteur (CD) comporte une succession longitudinale de dits segments (C1, C2...), ladite lame avant (L2) d'un dit segment (C1) autre qu'un dernier dit segment constituant aussi ladite lame arrière d'un dit segment (C2) suivant ce segment autre que dernier, lesdits bords de cote supérieure (T1, T2...) desdites lames avant et arrière (L1, L2, L3) étant formés à des cotes supérieures à celles desdits bords d'inversion d'écoulement (H1, H2) de manière à séparer lesdits segment les uns des autres tout en ménageant lesdits passages intermédiaires (P1) à l'intérieur de ces segments, lesdits volumes récepteurs primaires (R2) ou secondaires (RS) de tous lesdits segments se raccordant longitudinalement d'un même dit coté de ce corps et étant constitués par des zones longitudinalement successives d'un même bac récepteur primaire (RE) ou secondaire (RS), respectivement, lesdits bacs récepteurs primaire et secondaire étant mutuellement séparés par une cloison verticale longitudinale (2) et chaque dit segment (C1) comportant en outre des parois obturatrices primaire (A1) et secondaire (B1) obturant lesdites veines primaire (V1) et secondaire (W1) vers lesdits bacs récepteurs secondaire (RS) et primaire (RE), respectivement, de manière à éviter des raccordements parasites entre desdites veines primaires et secondaires par l'intermédiaire desdits bacs récepteurs.

**6/** Décanteur selon la revendication 5, caractérisé par le fait que lesdits bacs récepteurs primaire (RE) et secondaire (RS) sont situés desdits cotés entrée (CDE) et sortie (CDS) dudit corps de décanteur (CD), respectivement.

**7/** Décanteur selon la revendication 5, caractérisé par le fait qu'il comporte en outre:
- un collecteur d'entrée (CE) et un collecteur de sortie (CS) s'étendant longitudinalement et raccordant lesdites entrées (E1, E2...) et lesdites sorties (S1, S2...) de tous lesdits segments (C1, C2...) respectivement,
- des bacs d'entrée (BE) et de sortie (BS) raccordés d'une part auxdites entrée (ED) et sortie (SD) de décanteur d'autre part auxdits collecteurs d'entrée et de sortie, respectivement,
- et des moyens d'évacuation de boue (4, 6) pour évacuer lesdites boues (BU) à partir desdits bacs récepteurs (RE, RS).

**8/** Décanteur selon l'une quelconque des revendications 1 à 7, ledit fluide de base étant un liquide de base.

**9/** Décanteur selon la revendication 8, lesdites particules étant plus denses que ledit liquide de base de sorte que ledit sens de décantation est descendant et que lesdites cotes croissent vers le haut, ledit bord d'inversion d'écoulement (H1) d'un dit segment (C1) étant constitué par un bord supérieur de sa dite lame intermédiaire (M1), lesdites entrée (E1) et sortie (S1) dudit segment étant situées au bas desdites veines primaire (V1) et secondaire (W1) de ce segment, respectivement, lesdits bacs récepteurs (RE, RS) étant situés sous lesdites lames (L1, M1, L2, M2, L3) plus bas que lesdites entrées et sorties desdits segments (C1,C2...)
